# EUROPÄISCHE PATENTSCHRIFT

(11) **EP 1 360 042 B1**
(45) Veröffentlichungstag und Bekanntmachung des Hinweises auf die Patenterteilung: **07.05.2008**
(21) Anmeldenummer: 02714163.9
(22) Anmeldetag: 14.02.2002
(51) Int. Cl.: B25F 5/02, H01M 2/10

(54) **AKKUPACK FÜR EIN ELEKTRISCHES ARBEITSGERÄT**
BATTERY PACK FOR AN ELECTRIC TOOL
BATTERIE D'UN APPAREIL LECTRIQUE

(30) Priorität: 15.02.2001 DE 20102675 U
(43) Veröffentlichungstag der Anmeldung: 12.11.2003
(73) Patentinhaber: AEG Electric Tools GmbH, 71364 Winnenden (DE)
(72) Erfinder: GEIS, Wilhelm, 71397 Leutenbach (DE); HIRT, Dieter, 71364 Winnenden (DE)
(74) Vertreter: Wasmuth, Rolf
(86) Internationale Anmeldenummer: PCT/EP2002/001552
(87) Internationale Veröffentlichungsnummer: WO 2002/064322

(56) Entgegenhaltungen:
- EP-A- 1 069 630
- DE-U- 9 319 361
- US-A- 3 999 110
- US-A- 5 213 913
- US-B1- 6 168 881
- PATENT ABSTRACTS OF JAPAN vol. 1997, no. 07, 31. Juli 1997 (1997-07-31) & JP 09 073890 A (MAKITA CORP), 18. März 1997 (1997-03-18)

## Beschreibung

Die Erfindung betrifft einen Akkupack für ein elektrisch betriebenes Arbeitswerkzeug nach dem Oberbegriff des Anspruchs 1.

Derartige elektrisch betriebene Arbeitswerkzeuge sind z.B. Akkuschrauber, Akkubohrer oder dgl. Werkzeuge und bestehen im wesentlichen aus einem Gerätegehäuse mit dem elektrischen Antriebsmotor sowie einem am Gerätegehäuse befestigten pistolenartigen Handgriff. Zur Leistungsversorgung wird an dem freien Ende des Handgriffs ein Akkupack befestigt, vorzugsweise angeklipst, wobei der Akkupack über elektrische Kontakte mit elektrischen Leitungen zum Antriebsmotor in Verbindung tritt.

Um eine ausreichende Leistungsreserve zur Verfügung zu stellen, wurden in der Vergangenheit Nickel-Cadmium-Zellen verwendet, welche im Leistungsbereich von etwa 1,4 bis 2,2 Ah liegen. Aufgrund der Bauhöhe der zylindrischen Zellen und ihres Durchmessers ergeben sich relativ schwere, hohe und aufgrund der Anordnung in Reihen sehr lange Akkupacks. Wird ein derartiger Akkupack über einen Aufnahmeschuh am freien Ende des Handgriffs angeklipst, ragt ein Großteil seiner Länge vom Handgriff nach vorne in Richtung Bohrfutter. Dadurch liegt der Schwerpunkt des Akkupacks vor dem Handgriff und bewirkt ein Kippmoment, welches der Benutzer durch Krafteinleitung in den Handgriff auszugleichen hat. Beim Abstellen des Arbeitswerkzeuges auf dem als Standfläche ausgebildeten Boden des Akkupacks ist quer zur Längsmittelachse des Gerätegehäuses nur eine eingeschränkte Standfestigkeit gegeben, da aufgrund der Anordnung von zwei Reihen nebeneinander die Standfläche relativ schmal ist.

Die JP 09-073890 A1 zeigt einen Akkupack, der in einem mittigen Bereich eine erweiterte Standfläche besitzt. In dem Bereich der erweiterten Standfläche sind die Einzelzellen des Akkupacks nach außen versetzt angeordnet. Der erweiterte Bereich erstreckt sich über einen erheblichen Teil der Länge des Akkupacks bis unter den Anschlussschuh.

Die EP 1 069 630 A1 zeigt einen Akkupack, in dem unterschiedliche Einzelzellen angeordnet sind. Dabei sind jeweils zwei oder drei Einzelzellen nebeneinander in dem Akkupack angeordnet. Das Gehäuse des Akkupacks besitzt gerade verlaufende Längsseiten und abgerundete Stirnseiten.

Der Erfindung liegt die Aufgabe zugrunde, einen Akkupack der gattungsgemäßen Art derart weiterzubilden, daß dem Benutzer bei geringen Kippmomenten und hoher Standfestigkeit des Arbeitsgerätes auf der Standfläche des Akkupacks eine ausreichende Leistung zur Verfügung steht.

Die Aufgabe wird erfindungsgemäß nach den kennzeichnenden Merkmalen des Anspruchs 1 gelöst.

Die Erfindung zeichnet sich durch eine vorteilhafte Verknüpfung zwischen mechanischen und elektrischen Anforderungen aus. So wird durch die in der Reihe der Einzelzellen seitlich versetzt angeordnete Zelle die Standfläche des Akkupacks quer zur Längsmittelachse des Gerätegehäuses vergrößert, wodurch sich bei Absetzen auf der Standfläche des Akkupacks eine erhöhte Standsicherheit für das Arbeitswerkzeug selbst ergibt. Durch die versetzte Anordnung von Zellen in einer Reihe ist aber nicht nur die Standfläche vergrößert, sondern gleichzeitig die Baulänge des Akkupacks in Richtung der Längsmittelachse des Gerätegehäuses reduziert. Dies deshalb, da in Richtung der Längsmittelachse des Gerätegehäuses die Einzelzellen enger zueinander stehen können, weil durch die versetzte Lage der Außenumfang benachbarter Zellen näher nebeneinander liegen. Insbesondere bei der Ausführung von zwei Reihen nebeneinander können die ansonsten zwischen den Zellen gebildeten Toträume durch die versetzte Lage von Einzelzellen genutzt werden, wodurch sich die Reduzierung der Baulänge des Akkupacks selbst ergibt.

Durch die versetzte Lage von Einzelzellen in der Reihe kann gleichzeitig Raum für weitere Zellen geschaffen werden, so daß trotz verkürzter Baulänge des Akkupacks mehr Zellen angeordnet werden können, womit die Ausgangsspannung erhöht und damit die Kapazität des Akkupacks selbst gesteigert ist.

Da die erweiterte Standfläche in Draufsicht räumlich vor dem Anschlußschuh liegt, wirkt sich die Verkürzung der Baulänge auf den vom Handgriff abstehenden Teil des Akkupacks mit dem Ergebnis aus, daß der Schwerpunkt der vor dem Handgriff liegenden Zellen näher an den Handgriff herangerückt werden kann. Die durch den Akkupack zwangsläufig auftretenden Kippkräfte können durch die nähere Lage des Schwerpunktes zum Handgriff gesenkt werden.

In dem versetzten Teilabschnitt einer Reihe sind zwei Zellen nebeneinander angeordnet werden, wobei der Versatz derart ausgebildet ist, daß er zweckmäßig etwa dem halben Durchmesser einer Einzelzelle entspricht. Eine hohe Packungsdichte wird auch dadurch gewährleistet, daß alle Einzelzellen gleich sind, d.h. in einem Akkupack werden Einzelzellen gleicher Bauart von gleicher räumlicher Gestalt und Größe verwendet.

In Draufsicht auf einen Akkupack ergibt sich eine Anordnung der Zellen, die etwa einem Balkenkreuz entspricht. Dabei können zwölf Einzelzellen vorgesehen sein, von denen je fünf eine Reihe bilden, in der zwei Einzelzellen mit gleichem Maß zur gleichen Seite seitlich versetzt liegen. Dieser Teilabschnitt seitlich versetzt liegender Zellen liegt räumlich zwischen den in Längsrichtung des Gerätegehäuses ausgebildeten Enden des Schutzgehäuses des Akkupacks. Der sich zwischen den versetzt liegenden Zellen ergebende Freiraum kann zum Einfügen weiterer Zellen genutzt werden, wenn der seitliche Versatz mindestens dem halben Durchmesser einer Einzelzelle entspricht.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: eine perspektivische Darstellung eines elektrischen Arbeitswerkzeuges, nämlich eines Akkuschraubers,

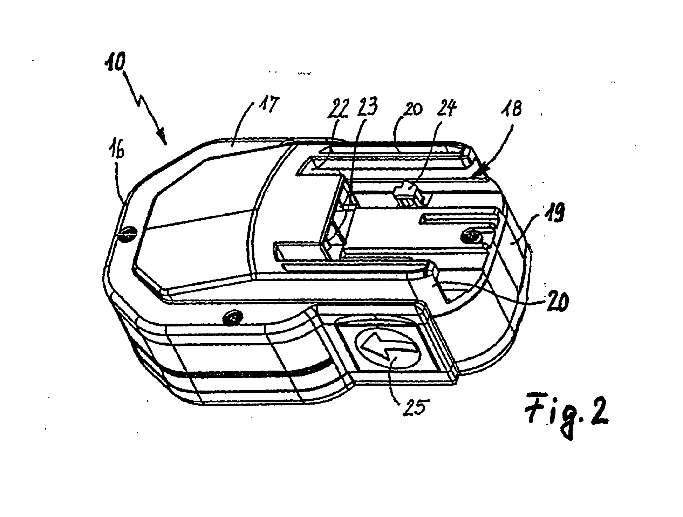

- Fig. 2: in vergrößerter, perspektivischer Darstellung eine Ansicht eines Akkupacks,
- Fig. 3: eine Draufsicht auf den Akkupack nach Fig. 2 und
- Fig. 4: eine Seitenansicht des Akkupacks nach Fig. 2.

Der erfindungsgemäße Akkupack ist für ein elektrisch betriebenes Arbeitswerkzeug mit einem in einem Gerätegehäuse 1 angeordneten elektrischen Motor 2 und einem am Gehäuse 1 befestigten Handgriff 3 bestimmt. Der Handgriff ist als sogenannter Pistolengriff ausgeführt und etwa mittig am übrigen Gerätegehäuse 1 festgelegt. Die Achse 4 des Handgriffs sowie die Längsmittelachse 5 des Gerätesgehäuses schließen einen nach vorne offenen Winkel 6 ein, der größer 90° ist. Im oberen Abschnitt des Handgriffs 3 ist ein Taster 7 zum Ein- und Ausschalten des Elektromotors 2 angeordnet. An dem dem Gerätegehäuse 1 abgewandten Ende 8 des Handgriffs 3 ist ein Akkupack 10 festgelegt, der zur elektrischen Energieversorgung des Antriebsmotors 2 dient.

Die Ausgangswelle 9 des Motors 2 liegt etwa auf der Längsmittelachse 5 des Gerätegehäuses 1.

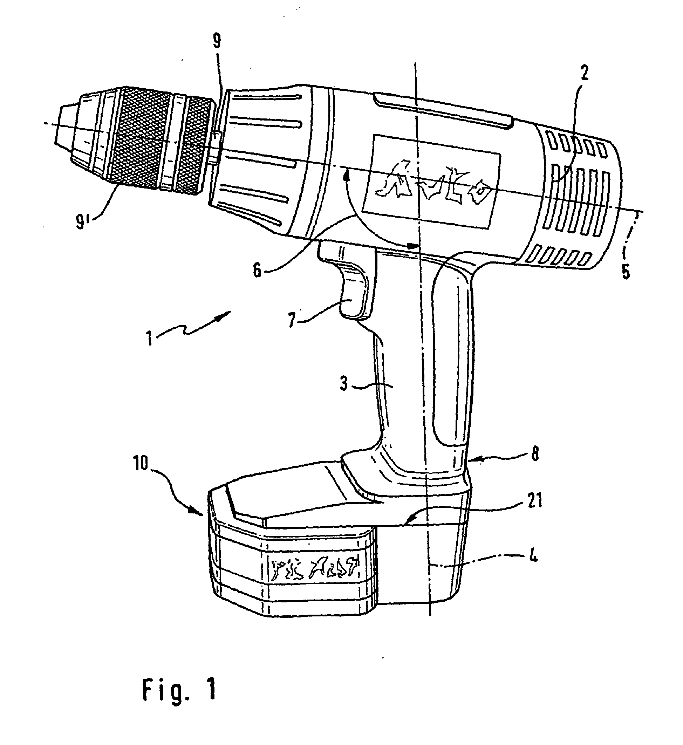

Der Akkupack 10 besteht aus einem die Einzelzellen 11 bis 14 bzw. 11' bis 14' aufnehmenden Schutzgehäuse 16, welches auf seiner dem Handgriff 3 zugewandten flachen Gehäuseseite 17 einen Aufnahmeschuh 18 aufweist, der zur hinteren Stirnseite 19 offen ist. Das freie Ende 8 des Handgriffs 3 wird von der offenen Stirnseite 19 in den Aufnahmeschuh 18 geschoben, wobei seitliche Führungsschienen 20 in eine entsprechende Führungsnut 21 (Fig. 1) des Handgriffs eingreifen und eine formschlüssige Verbindung des Handgriffs 3 mit dem Aufnahmeschuh 20 bzw. dem Akkupack 10 herstellen. An der dem offenen Ende gegenüberliegenden Endseite 22 des Aufnahmeschuhs 18 sind elektrische Kontakte 23 vorgesehen, die nach Einschieben des Endes 8 des Handgriffs 3 in den Aufnahmeschuh 18 eine elektrisch leitende Verbindung mit im Handgriff 3 vorgesehenen elektrischen Leitungen zum Antriebsmotor 2 herstellen. Zur verlierfesten Fixierung des Akkupacks 10 am Ende 8 des Handgriffs 3 sind im Aufnahmeschuh 18 Rastnasen 24 vorgesehen, welche in entsprechende Rastöffnungen im freien Ende 8 des Handgriffs 3 formschlüssig einrasten und eine unverlierbare Sicherung des Akkupacks 10 am Handgriff 3 gewährleisten. Die Rastelemente 24 sind mittels seitlicher Betätigungsfelder 25 in eine Freigabestellung bewegbar, in der das Ende 8 aus dem Aufnahmeschuh 18 herausgezogen werden kann.

Der Akkupack 10 hat auf seiner der flachen Gehäuseseite 17 mit dem Aufnahmeschuh 18 abgewandten Seite eine Standfläche 26, auf der das Arbeitswerkzeug abgestellt werden kann. Wie Fig. 1 zeigt, ragt das Akkugehäuse in Richtung der Längsmittelachse 5 des Gerätegehäuses 1 in Richtung zur Ausgangswelle 9, erstreckt sich somit im wesentlichen unterhalb des Elektromotors 2 in Richtung zum Werkzeugfutter 9'.

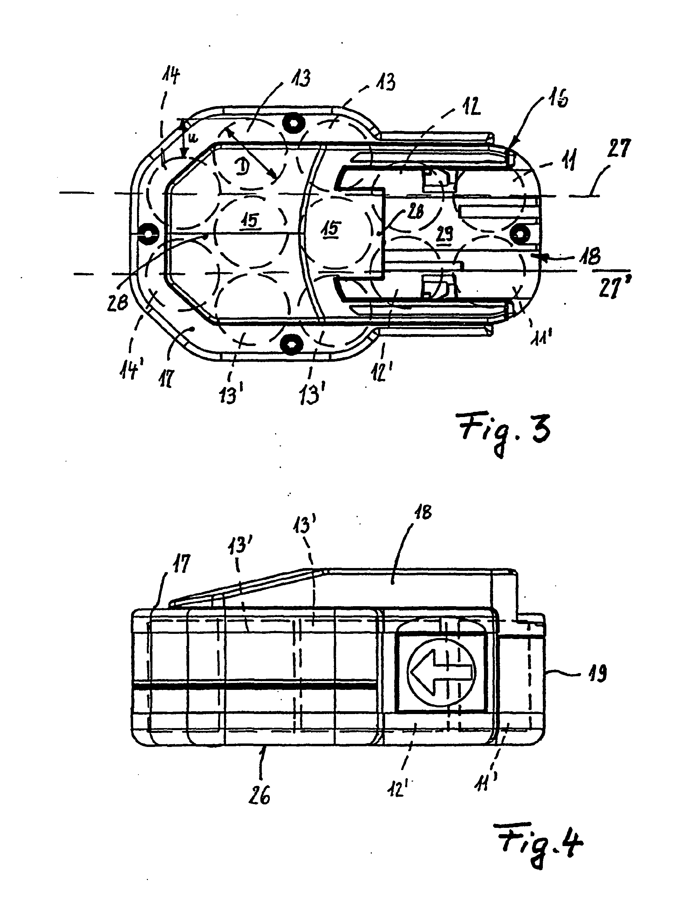

Das Schutzgehäuse 16 hat in Draufsicht nach Fig. 3 im Bereich außerhalb des Aufnahmeschuhs 18 quer zur Längsmittelachse 5 bzw. zur Ausgangswelle 9 eine größere Erstreckung als im Bereich des Anschlußschuhs 18 bzw. des Endes 8 des Handgriffs 3. Dabei ist die Gestalt des Schutzgehäuses 16 durch die Anordnung der Einzelzellen 11, 11' bis 14, 14' und 15 bestimmt.

Die Einzelzellen sind so angeordnet, daß sie im wesentlichen zwei Reihen 27 und 27' bilden, die sich von der Grundausrichtung in Längsrichtung der Motorwelle 9 in Richtung nach vorne zum Bohrfutter 9' erstrecken. Dabei liegen im Bereich des Anschlußschuhs 18 die Zellen 11, 12 bzw. 11', 12' der Reihen 27 und 27' bevorzugt auf gleicher Höhe nebeneinander und in Richtung der Längsmittelachse 5 des Gerätegehäuses 1 hintereinander. An die Zellen 12, 12' schließen in der Reihe Einzelzellen 13, 13' an, die quer zur Längsmittelachse 5 des Gerätegehäuses 1, also seitlich versetzt, liegen. Der seitliche Versatz u entspricht dabei bevorzugt dem halben Durchmesser D einer Einzelzelle, so daß zwischen den versetzt liegenden Einzelzellen 13 und 13' der Reihen 27 und 27' Freiraum für weitere Einzelzellen 15 vorzugsweise gleicher Bauart und Größe gegeben ist. Aufgrund dieser Anordnung ergibt sich quer zur Längsmittelachse 5 des Gerätegehäuses 1 eine erweiterte Standfläche 26, wodurch die Standsicherheit des Arbeitsgerätes bei Abstellen auf dem Akkugehäuse 10 deutlich erhöht ist. Die Anordnung hat aber auch den Vorteil, daß das Gewicht der Einzelzellen 13, 13' und 15 näher an der Achse 4 des Handgriffs 3 liegt, weshalb ein geringeres Kippmoment gegeben ist. Das Arbeitswerkzeug läßt sich bequemer und ermüdungsfreier mit geringem Kraftaufwand führen und benutzen.

Durch den seitlichen Versatz u in der Größe des halben Durchmessers D einer Einzelzelle wird zudem erreicht, daß die Einzelzellen 15 in den Freiraum 28 der benachbarten Zellen 12, 12' bzw. 14, 14' der Reihen 27 und 27' einragen können. Zylindrische Einzelzellen begrenzen aufgrund ihrer räumlichen Gestalt bei einer stehenden Anordnung nebeneinander zwischen sich einen Totraum 29, wie er in Fig. 3 zwischen den Zellen 11, 12, 11' und 12' dargestellt ist. Durch die versetzte Anordnung der Zellen 13, 13' können benachbarte Zellen in Längsrichtung der Reihen 27 und 27' näher an die Zellen 12, 12' bzw. 14, 14' angeordnet werden, so daß sich in Seitenansicht die Konturen der benachbarten Zellen überschneiden. Der Totraum ist minimiert. Dadurch wird auch eine Verminderung der Länge einer Reihe 27, 27' erzielt, ohne daß die Anzahl der Einzelzellen zu reduzieren ist. Im Ausführungsbeispiel sind zwölf Zellen im Akkupack 10 angeordnet, wobei die zwölf Zellen in Längsrichtung einer Reihe 27, 27' eine geringere Erstreckung haben als die Anordnung von je fünf streng in einer Reihe nebeneinander liegenden Einzelzellen. Das in Fig. 3 in Draufsicht erkennbare Balkenkreuz, welches durch die Zellreihen 27, 27' gebildet wird, bietet somit bei vergrößerter Standfläche und verkürzter Baulänge auch Vorteile aufgrund des nahe am Handgriff liegenden Schwerpunktes.

Im gezeigten Ausführungsbeispiel ist das Balkenkreuz aus sechs Zellen 13, 13', 15 gebildet, welche um den Versatz u versetzt zu der Längsmittelachse der Reihen 27 und 27' liegen. Die Reihen 27 und 27' enden mit Einzelzellen 14 und 14', die wiederum eng benachbart zu den versetzt liegenden Zellen 13, 13' und 15 liegen und in den zwischen ihnen gebildeten Freiraum 28 einragen.

In der Praxis kann mit der erfindungsgemäßen Anordnung der Zellen eine höhere Spannung des Akkupacks bereitgestellt werden, so daß die Kapazität der Einzelzellen abgesenkt werden kann, ohne daß sich im Gebrauch für den Benutzer wesentliche Einschränkungen ergeben. Die höhere Spannung, verbunden mit der geringeren Kapazität stellt dem Benutzer eine ausreichende Leistungsreserve zur Verfügung. Aufgrund der geringeren Kapazität und einer höheren Leistungsdichte sind die Einzelzellen in der Bauhöhe kleiner, so daß auch die Höhe des Akkupacks selbst reduziert werden kann. Im Gesamtergebnis führt dies zu einem leichteren, kleineren Akkupack mit vergrößerter Standfläche bei einer für den Benutzer ausreichenden Kapazität.

Es kann zweckmäßig sein, anstelle der Zellen 14, 14' Hohlkörper als Dummies einzusetzen, sofern eine geringere Versorgungsspannung wie z.B. 12V ausreichend ist. Die als Platzhalter verwendeten Hohlkörper sind deutlich leichter als eine Einzelzelle 14 bzw. 14', so daß das Gewicht weiter gesenkt und auch das vom Benutzer gegenzuhaltende Kippmoment gering ist.

## Patentansprüche

1. Akkupack für ein elektrisch betriebenes Arbeitswerkzeug mit einem in einem Gerätegehäuse (1) angeordneten elektrischen Motor (2) und einem am Gerätegehäuse (1) befestigten Handgriff (3), insbesondere für einen Akkuschrauber, einen Akkubohrer oder dgl., mit einem die Einzelzellen (11, 11' bis 14, 14' 15) des Akkupacks (10) aufnehmenden Schutzgehäuse (16), welches auf einer Gehäuseseite (17) einen Aufnahmeschuh (18) zum mechanischen Anschluß an das freie Ende (8) des Handgriffs (3) aufweist und in dem Aufnahmeschuh (18) elektrische Kontakte (23) zur Verbindung mit elektrischen Leitungen zum Antriebsmotor (2) vorgesehen sind, wobei die dem Aufnahmeschuh (18) abgewandte, bodenbildende Gehäuseseite eine Standfläche (26) bildet, die sich im wesentlichen etwa in Richtung der Längsmittelachse (5) des Gerätegehäuses (1) erstreckt und die Einzelzellen (11, 11' bis 14, 14', 15) im Schutzgehäuse (16) in Längsrichtung des Gerätegehäuses (1) etwa hintereinanderliegend angeordnet sind,
wobei in einer sich in Längsrichtung der Längsmittelachse (5) des Gerätegehäuses (1) erstreckenden Reihe (27, 27') von Einzelzellen (11, 11', 12, 12', 13, 13', 14, 14') zumindest eine Zelle (13, 13') seitlich versetzt derart angeordnet ist, daß die Standfläche (26) in einem Teilabschnitt des Schutzgehäuses (16) quer zur Längsmittelachse (5) des Gerätegehäuses (1) erweitert ist,
**dadurch gekennzeichnet, daß** alle Einzelzellen (11, 11' bis 14, 14', 15) des Akkupacks (10) identisch sind, daß in dem versetzten Teilabschnitt der Reihe (27, 27') zwei Zellen (13, 15; 13', 15) nebeneinander angeordnet sind und daß die erweiterte Standfläche (26) in Draufsicht räumlich vor dem Anschlußschuh (18) liegt.

2. Akkupack nach Anspruch 1,
**dadurch gekennzeichnet, daß** der Anschlußschuh (18) das Ende (8) des Handgriffs (3) vollständig aufnimmt.

3. Akkupack nach einem der Ansprüche 1 oder 2,
**dadurch gekennzeichnet, daß** die Zellen (13, 13', 15) des versetzten Teilabschnitts mit den Zellen (11, 11', 12, 12', 14, 14') einer Reihe (27, 27') etwa ein Balkenkreuz bilden.

4. Akkupack nach einem der Ansprüche 1 bis 3,
**dadurch gekennzeichnet, daß** der Akkupack (10) zwölf Einzelzellen (11, 11' bis 14, 14', 15) aufweist, von denen sechs Einzelzellen (15) zu der Reihe (27, 27') seitlich versetzt liegen.

5. Akkupack nach einem der Ansprüche 1 bis 4,
**dadurch gekennzeichnet, daß** der versetzte Teilabschnitt räumlich zwischen den in Richtung der Längsmittelachse (5) des Gerätegehäuses (1) ausgebildeten Enden des Schutzgehäuses (16) liegt.

6. Akkupack nach einem der Ansprüche 1 bis 5,
**dadurch gekennzeichnet, daß** in dem versetzten Teilabschnitt die Einzelzellen (13, 13', 15) um einen Versatz (u) seitlich versetzt liegen, der etwa dem halben Durchmesser (D) einer Einzelzelle entspricht.

## Claims

1. Battery pack for an electrically operated tool, in particular for a cordless screwdriver, a cordless drill or the like, with an electric motor (2) located in a tool housing (1) and a handle (3) secured to the tool housing (1), with a protective housing (16) accommodating the individual cells (11, 11' to 14, 14', 15) of the battery pack (10), which on one side (17) has a locating shoe (18) for mechanical connection to the free end (8) of the handle (3) and wherein electrical contacts (23) are provided in the locating shoe (18) for connection to electrical lines to the drive motor (2), wherein the housing side remote from the locating shoe (18) and forming the base represents a support surface (26) substantially extending approximately in the direction of the central longitudinal axis (5) of the tool housing (1) and wherein the individual cells (11, 11' to 14, 14', 15) are arranged approximately one behind the other in the longitudinal direction of the tool housing (1), wherein, in a row (27, 27') of individual cells (11, 11', 12, 12' 13, 13' 14, 14') extending in the longitudinal direction of the central longitudinal axis (5) of the tool housing (1), at least one cell (13, 13') is laterally offset such that the support surface (26) is extended in a section of the protective housing (16) at right angles to the central longitudinal axis (5) of the tool housing (1),
**characterised in that** all of the individual cells (11, 11' to 14, 14', 15) of the battery pack (10) are identical, **in that** two cells (13, 15; 13', 15') are arranged adjacent to one another in the offset section of the row (27, 27'), and **in that** the extended support surface (26) is spatially located in front of the connecting shoe (18) if viewed from the top.

2. Battery pack according to claim 1,
**characterised in that** the connecting shoe (18) completely accommodates the end (8) of the handle (3).

3. Battery pack according to claim 1 or 2,
**characterised in that** the cells (13, 13', 15) of the offset section form a kind of beam cross with the cells (11, 11', 12, 12', 14, 14') of a row (27, 27').

4. Battery pack according to any of claims 1 to 3,
**characterised in that** the battery pack (10) comprises twelve individual cells (11, 11' to 14, 14', 15), of which six individual cells (15) are laterally offset relative to the row (27, 27').

5. Battery pack according to any of claims 1 to 4,
**characterised in that** the offset section is spatially located between the ends of the protective housing (16) formed in the direction of the central longitudinal axis (5) of the tool housing (1).

6. Battery pack according to any of claims 1 to 5,
**characterised in that** the individual cells (13, 13', 15) in the offset section are laterally offset by an offset (u) corresponding approximately to half of the diameter (D) of an individual cell.

## Revendications

1. Bloc de batterie pour un outil actionné électriquement, avec un moteur électrique (2), monté dans un carter (1) de l'outil, et une poignée (3), fixée sur le carter (1) de l'outil, en particulier pour une visseuse électrique sans fil, une perceuse électrique sans fil ou tout élément similaire, comportant un boîtier de protection (16), qui reçoit les éléments de batterie (11, 11' à 14, 14', 15) du bloc de batterie (10) et lequel comporte, sur un côté (17) du boîtier, un patin de réception (18) destiné à l'assemblage mécanique à l'extrémité (8) libre de la poignée (3), et des contacts électriques (23), destinés à la liaison avec des lignes électriques vers le moteur d'entraînement (2), sont prévus dans le patin de réception (18), sachant que le côté du boîtier, formant le fond et opposé au patin de réception (18), constitue une surface de pose (26), qui s'étend sensiblement dans la direction de l'axe médian longitudinal (5) du carter (1) de l'outil, et les éléments de batterie (11, 11' à 14, 14', 15) sont logés à peu près les uns derrière les autres dans le sens longitudinal du carter (1) de l'outil à l'intérieur du boîtier de protection (16), sachant que dans une rangée (27, 27') d'éléments de batterie (11, 11', 12, 12', 13, 13', 14, 14'), laquelle s'étend dans le sens longitudinal de l'axe médian longitudinal (5) du carter (1) de l'outil, au moins un élément de batterie (13, 13') est agencé en étant décalé latéralement de telle sorte que la surface de pose (26) s'élargit dans une zone partielle du boîtier de protection (16) transversalement à l'axe médian longitudinal (5) du carter (1) de l'outil,
**caractérisé en ce que** tous les éléments de batterie (11, 11' à 14, 14', 15) du bloc de batterie (10) sont identiques, **en ce que** dans la zone partielle décalée de la rangée (27, 27') sont disposés côte à côte deux éléments de batterie (13, 15 ; 13' 15), et **en ce que**, par référence à une vue en élévation, la surface de pose (26) élargie est située dans l'espace en amont du patin de réception (18).

2. Bloc de batterie selon la revendication 1, **caractérisé en ce que** le patin de réception (18) reçoit entièrement l'extrémité (8) de la poignée (3).

3. Bloc de batterie selon la revendication 1 ou 2, **caractérisé en ce que** les éléments de batterie (13, 13', 15) de la zone partielle décalée forment avec les éléments de batterie (11, 11', 12, 12', 14, 14') d'une rangée (27, 27') sensiblement une croix.

4. Bloc de batterie selon l'une quelconque des revendications 1 à 3, **caractérisé en ce que** le bloc de batterie (10) comporte douze éléments de batterie (11, 11' à 14, 14', 15), parmi lesquels six éléments de batterie (15) sont décalés latéralement par rapport à la rangée (27, 27').

5. Bloc de batterie selon l'une quelconque des revendications 1 à 4, **caractérisé en ce que** la zone partielle décalée est située dans l'espace entre les extrémités du boîtier de protection (16), réalisées dans la direction de l'axe médian longitudinal (5) du carter (1) de l'outil.

6. Bloc de batterie selon l'une quelconque des revendications 1 à 5, **caractérisé en ce que** dans la zone partielle décalée, les éléments de batterie (13, 13', 15) sont situés en étant décalés selon un déport (u) qui correspond sensiblement à la moitié du diamètre (D) d'un élément de batterie.
